# EUROPEAN PATENT APPLICATION

(11) **EP 4 095 733 A1**
(43) Date of publication of application: **30.11.2022**
(21) Application number: 22173184.7
(22) Date of filing: 13.05.2022
(51) Int. Cl.: G06F 30/15, G06F 30/20, G06F 30/28

(54) **GRADIENT FREE DESIGN ENVIRONMENT INCLUDING ADAPTIVE DESIGN SPACE**

(30) Priority: 21.05.2021 US 202117326726
(71) Applicant: Raytheon Technologies Corporation, Farmington, CT 06032 (US)
(72) Inventor: JOLY, Michael M., Hebron, 06248 (US)
(74) Representative: Dehns

(57) **Abstract**

An iterative optimization component of a computer aided design system includes an optimization module (300) having at least one of at least one solver (320) configured to determine at least one value corresponding to a set of parameters defining a sample point and an algorithmic analysis configured to determine the at least one value corresponding to the set of parameters defining the sample point. The optimization module (300) further includes at least one of a surrogate assisted optimization process and an algorithmic optimization process (340). The at least one of the surrogate assisted optimization process and the algorithmic optimization process (340) determine at least one optimum point in a design space using an initial set of sample points and output the optimum point as at least one additional sample point. A self-adapting bound function (360) receives a combination of the initial sample points and the additional sample point and adjusts at least one bound of the design space when the combination of the initial sample points and additional sample points has a number of sample points above a threshold number of sample points within a threshold distance of a bound of the design space. The self-adapting bound function (360) outputs the new design space. The iterative optimization component is configured to iterate until the number of sample points within the threshold distance of each bound of the design space is below the threshold number of sample points.

## Description

### TECHNICAL FIELD

The present disclosure relates generally to design software and systems for optimizing a complex geometry using a gradient free optimization process.

### BACKGROUND

Modern aircraft, and particularly gas turbine engines for modern aircraft, utilize many components, such as airfoil shaped rotors and stators, that include highly complex geometries. In certain cases the geometry is sufficiently complex that analysis and verification of designed systems cannot practicably be performed by an individual or team of individuals without requiring expensive prototype components and testing of the physical prototypes.

To assist designers in performing the initial analysis of designs without requiring the creation of expensive prototypes, design software has been developed that enables simulations such as computational fluid dynamics analysis and optimizations to be performed on initial designs. The simulations verify the feasibility of the design and in some cases optimize the design within a pre-defined design space. Such systems utilize parameter bounds defined by the initial designer to limit the analysis to reasonable variations. Typically, the number of parameters analyzed will exceed three and the bounds create a design space that exceeds three-dimensional geometry. Bounds with more than three dimensions are referred to as multi-dimensional bounds, and are difficult for a person to conceptualize with the difficulty increasing as more dimensions are added.

### SUMMARY OF THE INVENTION

From a first aspect, there is provided an iterative optimization component of a computer aided design system includes an optimization module including at least one of at least one solver configured to determine at least one value corresponding to a set of parameters defining a sample point and an algorithmic analysis configured to determine the at least one value corresponding to the set of parameters defining the sample point, the optimization module further including and at least one of a surrogate assisted optimization process and an algorithmic optimization process, the at least one of the surrogate assisted optimization process and the algorithmic optimization process being configured to determine at least one optimum point in a design space using an initial set of sample points and to output the at least one optimum point as at least one additional sample point, a self-adapting bound function configured to receive a combination of the initial sample points and the at least one additional sample point and configured to adjust at least one bound of the design space when the combination of the initial sample points and the at least one additional sample point has a number of sample points above a threshold number of sample points within a threshold distance of a bound of the design space, and output the new design space, and wherein the iterative optimization component is configured to iterate until the number of sample points within the threshold distance of each bound of the design space is below the threshold number of sample points.

In an example of the above described iterative optimization component of a computer aided design system the at least one of the surrogate assisted optimization process and the algorithmic optimization process includes the surrogate assisted optimization process, and the iterative optimization module further comprises a database configured to receive the at least one optimum value from the surrogate assisted optimization process, the database including all previously identified sample points.

In another example of any of the above described iterative optimization components of a computer aided design system the optimization module includes a plurality of solvers, each solver of the at least one solver being configured to determine at least one distinct value corresponding to each sample point.

In another example of any of the above described iterative optimization components of a computer aided design system the optimization module includes at least a computational fluid dynamics efficiency solver.

In another example of any of the above described iterative optimization components of a computer aided design system the optimization module includes the algorithmic analysis configured to determine the at least one value corresponding to the set of parameters defining the sample point.

In another example of any of the above described iterative optimization components of a computer aided design system the design space is a multi-dimensional design space having greater than three dimensions.

In another example of any of the above described iterative optimization components of a computer aided design system each dimension of the design space corresponds to a parameter of a complex component design.

In another example of any of the above described iterative optimization components of a computer aided design system the complex component design is an airfoil shaped component for a gas turbine engine.

In another example of any of the above described iterative optimization components of a computer aided design system the threshold distance is a fixed magnitude determined as a percentage of the initial design space.

In another example of any of the above described iterative optimization components of a computer aided design system the threshold distance is a percentage of a current design space.

In another example of any of the above described iterative optimization components of a computer aided design system the threshold number of sample points is at least 10% of the total number of sample points in the design space.

In another example of any of the above described iterative optimization components of a computer aided design system the threshold number of sample points is 15% of the total number of sample points in the design space.

In another example of any of the above described iterative optimization components of a computer aided design system adjusting at least one bound of the design space comprises simultaneously adjusting each bound of the design space where the combination of the initial sample points and the at least one additional sample point has a number of sample points above the threshold number of sample points within the threshold distance of the bound of the design space.

An exemplary process for designing a complex structure includes defining a plurality of parameters, the plurality of parameters combining to define a shape and structure of the complex structure, defining a multi-dimensional parameter space having a dimension corresponding to each parameter in the plurality of parameters, defining an upper bound on each dimension of the multi-dimensional parameter space and a lower bound on each dimension of the multi-dimensional parameter space, distributing a plurality of initial sample points within the bounds in the multi-dimensional space, performing an optimization process configured to optimize for at least one feature, the optimization process identifying at least one new sample point within the bounds, identifying a presence of at least a threshold percentage of sample points within a threshold distance of a first bound and shifting the first bound, thereby expanding the size of the multi-dimensional parameter space, and reiterating the optimization process and identifying the presence of at least the threshold percentage of the sample points within the threshold distance of the first bound until less than the threshold percentage of the sample points are within the threshold distance of the each bound.

In another example of the above described process for designing a complex structure the multi-dimensional parameter space is greater than three dimensions.

In another example of any of the above described processes for designing a complex structure the optimization process is configured to optimize for a plurality of feature including computational fluid dynamics efficiency and stress resilience.

In another example of any of the above described processes for designing a complex structure the complex structure is a gas turbine engine component including an airfoil shaped profile.

In another example of any of the above described processes for designing a complex structure shifting the first bound comprises moving the first bound a distance equal to a percentage of the current design space.

Another example of any of the above described processes for designing a complex structure further includes simultaneously shifting each bound having at least threshold percentage of sample points within a threshold distance of the bound.

These and other features of the present invention can be best understood from the following specification and drawings, the following of which is a brief description.

### BRIEF DESCRIPTION OF THE DRAWINGS

Figure 1 illustrates an exemplary aircraft component having a complex geometry.
Figure 2 illustrates an exemplary parameterization of two parameters defining the aircraft component of Figure 1.
Figure 3 illustrates an exemplary set of initial design positions within designer identified bounds.
Figure 4A illustrates an exemplary gradient free optimization operation of a design software module utilizing a non-surrogate based optimization algorithm.
Figure 4B illustrates an exemplary gradient free optimization operation of a design software module utilizing a surrogate assisted optimization algorithm.
Figure 5 schematically illustrates a self- adaptive bound adjustment within the gradient free optimization operation of Figure 4.
Figure 6 illustrates a shifting bound across multiple iterations of the self-adaptive bound adjustment of Figure 5.
Figure 7 illustrates an example self-adaptive bound adjustment including variable bound increases.
Figure 8 illustrates an example self-adaptive bound adjustment including a constant bound box size.
Figure 9 illustrates an example self-adaptive bound adjustment including a shrinking bound box.

### DETAILED DESCRIPTION

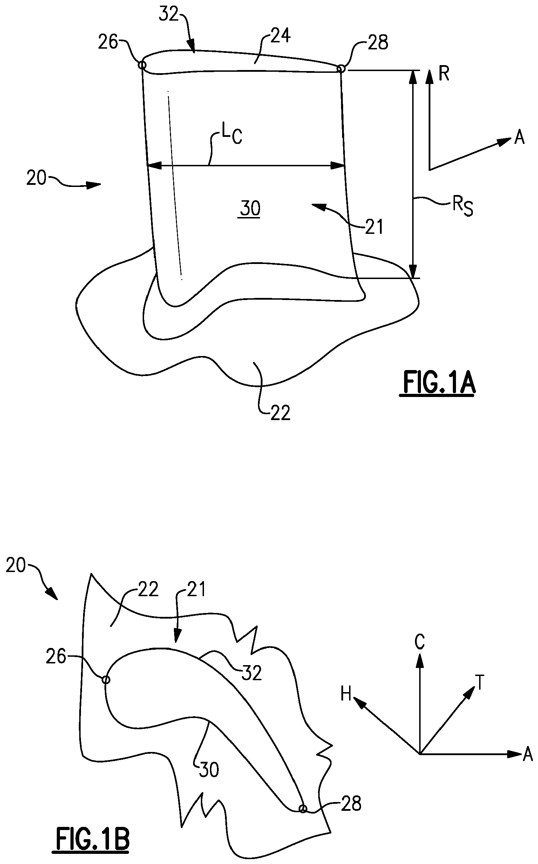

Figures 1A and 1B illustrate an example engine airfoil element 20, for example, a blade or a vane, extends in a radial direction R, or spanwise, from at least one flow path surface 22, for example, a platform or a shroud, to, for example, a tip 24 or a shroud. The airfoil element 20 includes an airfoil 21 having leading and trailing edges 26, 28 spaced apart in in a chord-wise direction H. In the case of a blade, the tip 24 is arranged adjacent to a blade outer air seal.

The airfoil 21 includes pressure (typically concave) and suction (typically convex) sides 30, 32 spaced apart in an airfoil thickness direction T, generally perpendicular to the chord-wise direction H, that are joined at the leading and trailing edges 26, 28. Multiple airfoils 21 are arranged circumferentially in a circumferential direction C in an array to form part of a gas turbine engine stage.

As shown in FIG. 1A, the airfoil 20 has a radial span RS and a chord length LC. An inner or outer platform or a shroud may be provided at one or both radial extremities of the airfoil 20, depending upon the application. RS may be defined as the minimum radial distance between the radially outboard-most portion of airfoil 20, which may be the tip 24 in the case of a blade, to the radially inboard-most portion of the airfoil 20. The radially inboard- or outboard-most portion may be an end supported by potting elastomeric material and an inner or outer ring, or a vane having an integral inner or outer shroud. Alternatively, both ends of the airfoil may be supported in radially spaced rings by potting. RS may be defined as excluding any fillet that adjoins the airfoil's aerodynamic exterior surface to any inner or outer platform or shroud. LC may be defined as the distance from the leading edge 26 to the trailing edge 28 at about 50% span.

In addition to radial span RS, chord length LC, airfoil thickness, other parameters can impact the performance and suitability of the component. By way of example, the other parameters can include wall thickness at a given span %, tilt, camber, chord length, blade count, lean and sweep. During a component design process, an initial component design and shape is created by the designer using any conventional design process and system. The initial design is then reduced to multiple parameters that define the shape and structure of the part. The process of defining the parameters is referred to as parameterization and includes identifying a range of values that are acceptable for each parameter.

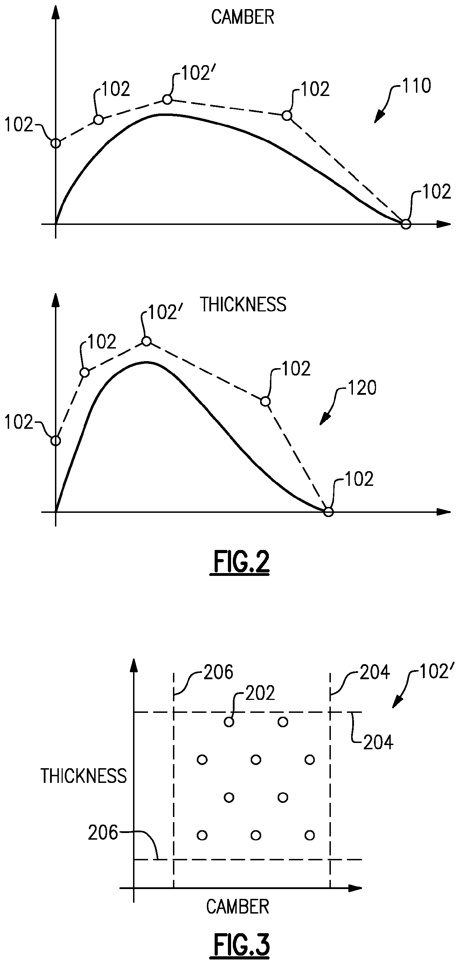

Figure 2 illustrates the parameterization of "thickness" and "camber" from a first chord-wise position in the blade 20 of Figure 1 to a second chord-wise position in the blade 20 of Figure 1. In Figure 2, the horizontal axis in each chart is a chord-wise position and the vertical axis are camber angle and thickness respectively.

In one example, the first chord-wise position is a leading edge position 26 at a given cross-section of the blade 20 and the second chord-wise position is the trailing edge position 28 at the given cross-section of the blade 20. Each parameter is also assigned multiple points 102 along the range from the first position to the second position at which the parameter is measured. Once the parameters, and the points 102 have been identified, the designer sets a set of initial bounds for each parameter at each point. In alternate examples, the design software can automatically set ranges for each of the parameters at each point based on predefined rulesets or machine learned ranges.

Once the complex component is fully parametrized each point can be positioned on a multi-dimensional coordinate system, with each dimension corresponding to one of the parameters. With continued reference to Figure 2, Figure 3 illustrates a single point 102' positioned on a two-dimensional plot of thickness to camber with an upper design bound 204 and a lower design bound 206 for each parameter. The thickness can be, in one example, the maximum thickness at the give cross-section. In another example, the thickness can be a chord-wise thickness distribution at the given cross-section. Thickness and camber are selected as arbitrary exemplary parameters, and the disclosed process applies to all types of parameters without limitation to the two exemplary parameters. Alternatively, the parameters can be referred to as X1, X2...Xn with each "X" value corresponding to a distinct parameter. The area within the bounds 204, 206 is the design space, and the set of X values of each sample point defines where the sample point 202 is within the design space. In a practical embodiment, the design space is multi-dimensional including three, four, or seven or more or more potential dimensions on each design space. Within the design space, multiple initial sample points 202 are identified. Each initial sample point 202 is a position that would generate an acceptable component, as it is within the design space. The illustrated example includes 10 sample points 202, although some practical implementations can include a number of sample points ranging from 10 to 20 sample points. In some alternative practical implementations, the number of sample points can be increased to the range of 100-300 sample points. In some examples the initial sample points 202 are evenly distributed. In alternative examples, the initial sample points 202 can be unevenly distributed.

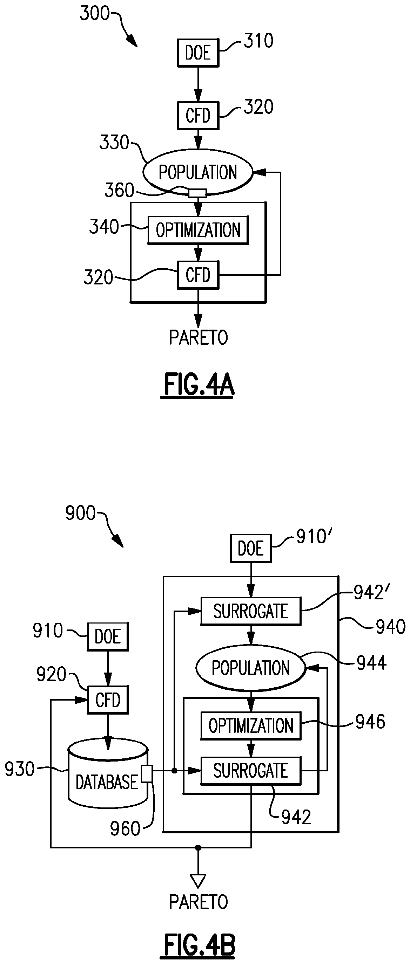

The design space, including the initial sample points 202 is provided to an optimization module 300, illustrated in Figure 4A or to an optimization module 900 illustrated in Figure 4B, at a design of experiment (DOE) input 310, 910. With reference to Figure 4A the initial sample points 202 are provided to a solver 320, such as a computational fluid dynamics (CFD) solver. The two illustrated solvers 320 are identical and can be a single solver function or module in a practical implementation. The solver 320 determines a set of variables (referred to as "Y" values) corresponding to the sample point defined by the X values. In the example of a CFD solver, the output variables are computational fluid dynamics parameters, and the single solver 320 can produce multiple "Y" variables. In alternative systems, where the optimization algorithms optimize for a single feature the optimization algorithm is referred to as a single objective optimizer. In alternative examples, alternative optimizations can be single or multi-objective depending on the needs of the particular system. In yet further alternatives, the solver 320 can be replaced with an algorithmic analysis such as an analytical function or a reduced order model.

The total population of samples is provided to an optimization algorithm 340 within the optimization module 300. The optimization algorithm 340 of Figure 4A can be a genetic optimization, an evolutionary optimization algorithm, or any similar optimization algorithm type capable of self-generating new optimum points. The optimization algorithm 340 uses the established population, defined within the database 330 to identify optima based on constraints on each of the Y values. The Y constraints are established by the designer, and can include constraints such as Y1 must exceed a minimum value, Y2 must be greater than Y3, Y3 must fall within a band of values, etc. The constraints described herein are purely exemplary and any similar constraints can be used in addition to, or in place of, the described constraints.

Each identified optima based on the constraints is again output to the solver(s) 320 as a sample point defined by a number of X values corresponding to each of the parameters being considered. The solver 320 identifies the corresponding Y values of the optima are identified as new sample points, and the new sample points including the corresponding Y values are provided to the data base 330.

As the optimum result is limited by the initially selected bounds, the above described operations assume that initially selected bounds 204, 206 provide sufficient design space to identify the most optimum point. In addition, gradient free optimization procedures such as those described herein cannot be operated without a set of bounds. Incorrect, or sub-optimal bounds can reduce the efficiency of automated process and decrease the reliability of the result of the automated processes.

In order to address the limitations of the initially selected bounds 204, 206, a self-adapting bound function 360 is included between the output of the database 330 and the non-surrogate assisted optimization algorithms. The self-adapting bound function 360 analyzes the entire pool of sample points, including any newly added sample points, and determines whether and how to change the bounds 204, 206 based on proximity of the sample points to the bounds.

In an alternate example, the mathematical optimizations 340 can be replaced with a surrogate-assisted optimization. Figure 4B illustrates an example surrogate assisted optimization process, with like numeral to the non-surrogate assisted example of Figure 4A representing like elements.

As with the example of Figure 4A, the process 900 of Figure 4B initially includes a designer defining the bounds 204, 206 as well as the X values defining the initial sample points within the bounds in a design of experiment (DOE) 910. In addition to the initial sample points, an initial surrogate model 942' is built from regression of database 930 and provided to the surrogate assisted optimization module 940.

The initial regression, or 'surrogate' model is used to assist in the computationally expensive design and optimization of the sample points for each of the X values defining the sample points. The surrogate models can be generated as regression models expressing a data fit between the parameters (X values) of a design space and a solver-produced performance quantity, or quantities, (Y values) used to formulate objective and constraint functions, such as the Y value constraints described previously. Alternatively, the surrogate models 942' can be generated as regression models expressing a data fit between the parameters of design space and the objective and constraint functions. The surrogate models 942' for performing these operations can include Gaussian processes, neural network process, and tree-based decision analysis.

In one example, the surrogate-assisted optimization allows moderate-fidelity modeling, such as a Reynolds Averaged Navier Stokes (RANS), to enable complex performance analysis. Lower-order surrogate models are mathematically fit to represent targeted quantities of interest of higher fidelity, and are used within the optimization module 900 to rapidly identify optimal designs within the design space, and to identify sensitivities to key design parameters.

In a first iteration of the optimization process 900, the initial sample points are provided to a solver 920, which determines the corresponding Y values for each point in the set of initial sample points. In some alternatives, the solver 920 can be replaced with an algorithmic analysis such as an analytical function or a reduced order model. The sample points and corresponding Y values are provided to a database 930 of sample points. The initial sample points and corresponding Y values are provided to an initial surrogate model 942'. The surrogate model 942' uses a regression, or 'surrogate' model to assist in computationally expensive CFD (computational fluid dynamics) design and optimization of the parameters.

The initial surrogate model 942' built from the regression of database 930 analyzes the sample points and corresponding Y values to determine a heat map of the design space defined by the bounds 204, 206. The heat map provides a predicted set of Y values for any given point defined within the initial design space. This heat map defines a population 944, and the population 944 is provided to an optimizer 946 that uses statistical analysis and the Y constraints to determine one or more optima within the heat map. In one non-limiting example, the statistical analysis can include a Bayesian analysis.

After the optimization algorithm 946 and identification of optimum using surrogate model 942, the resulting optimum is analyzed by the solver 920 and added to the database 930. After adding the newly analyzed optimum to the database 930, the process 900 adapts the training of the surrogate 942' with the added CFD information. A new heat map is produced by the updated surrogate 942'.

The surrogate assisted optimization process 942, 946 balances the various optimized positions from the solvers 920 to generate the set of new sample points. The updated population includes the initial sample points 202, as well as multiple identified new sample points corresponding to the optima identified by the surrogate assisted optimization process. The number of new sample points is referred to herein as the "sampling rate". The multiple identified new sample points are applied to the solvers 920 as another iteration of the process, and the sample points converge on a single optimum / multiple optima point in the design space. In one alternative the optimization algorithm is a multi-objective optimization and the sample iterations use the sample points to identify a set of optima distributed along a Pareto front.

As with the example of Figure 4A, the new sample points defined by the optima results are limited by the initially selected bounds of the design space, and a self-adapting bound function 960 is included between the output of the database 930 and the surrogate model 942.

However, the optimum result is limited by the initially selected bounds. Further, gradient free optimization procedures such as those described herein require the bounds in order to operate. Incorrect, or sub-optimal bounds can reduce the efficiency of automated process and decrease the reliability of the result of the automated processes.

As with the examples of Figure 4A, a self-adapting bound function 960 is included to address the limitations of the initially selected bounds 204, 206. The self-adapting bound function 960 is located between the output of the database 930 and the non-surrogate assisted optimization algorithms, and analyzes the entire pool of sample points, including any newly added sample points from the surrogate assisted optimization loop 940, and determines whether and how to change the bounds 204, 206 based on proximity of the sample points to the bounds.

While the examples of Figure 4A and 4B each illustrate a single solver 320, 920 configured to determine multiple Y values corresponding to each sample point, practical implementations can include any number of additional solvers including acoustic, stress, and aero-mechanical solvers. The solvers operate according to known principles to utilize the provided design space and initial points to identify particular Y values corresponding to the sample point that each solver is configured to solve for.

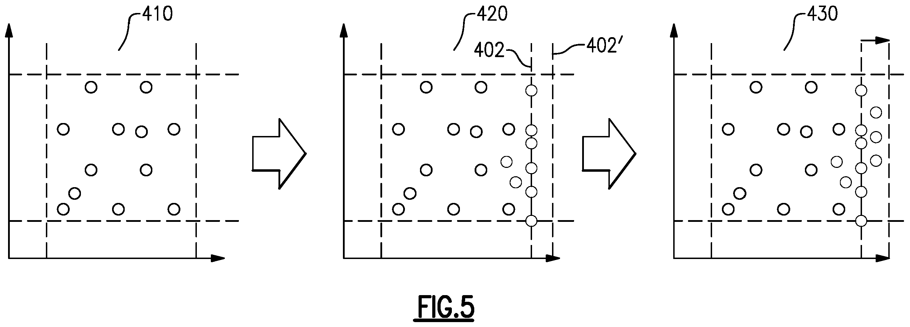

With continued reference to Figures 4A and 4B, Figure 5 illustrates an example operation of the self-adapting bound function 360, 960 with an initial set of points 410 processed through the optimizer module 300 to generate a new set of sample points 420. The self-adapting bound function 360, 960 analyzes the positions of the new set of sample points 420. When it is detected that a large number of the sample points crowd one of the bounds (i.e. are within a certain distance of the bound), the self-adapting bound function 360, 960 shifts the position of the bound, thereby increasing the size of the design space for subsequent iterations of the process 300, 900.

In one example, the self-adapting bound function determines that the bound is crowded when at least 100% of the sampling rate at the given optimization iteration are within a threshold distance of the bound. In another example, the self-adapting bound function determines that the bound is crowded when at least 150% of the sampling rate at the given optimization iteration are within the threshold distance of the bound. In yet another example, the self-adapting bound function 360 determines that the bound is crowded when at least 200% of the sampling rate are within the threshold distance of the bound.

The threshold distance described and utilized above can be set or calibrated dependent on the particular parameter being bounded. In some examples, the threshold distance is a percentage of the range from lower bound to upper bound. By way of example, if a 10% threshold distance is defined, the portion of the design space between 90% and 100% will be deemed to crowd the upper bound, and the portion of the design space between 0% and 10% will be deemed to crowd the lower bound during the initial iteration. In subsequent iterations, the magnitude of the 0-10% or the 90-100% range is used as the definition of crowding, rather than a percentage of the design space.

In another example, the bounds can be shifted based on a percentage of the current range for the design space (e.g. 10% of the current range for the design space). In such an example, the bound will increase by a larger magnitude each iteration that the optimization module runs. This example converges faster, but has a greater possibility to over expand the bounds in the last iteration. In alternative examples the distance threshold can be manually set by a designer to a fixed magnitude per iteration, reducing the chance to over expand the bounds but increasing the number of iterations required.

Once the bounds have been increased, the optimization module 300 reiterates, and additional optimum points are identified within the new area of the design space. The second set of sample points 430 in the increased design space is then applied to the process again. Over the course of several iterations, the bound(s) are continuously increased until none of the bounds are crowded, and the optimization module selects a true optimum/optima within the design space.

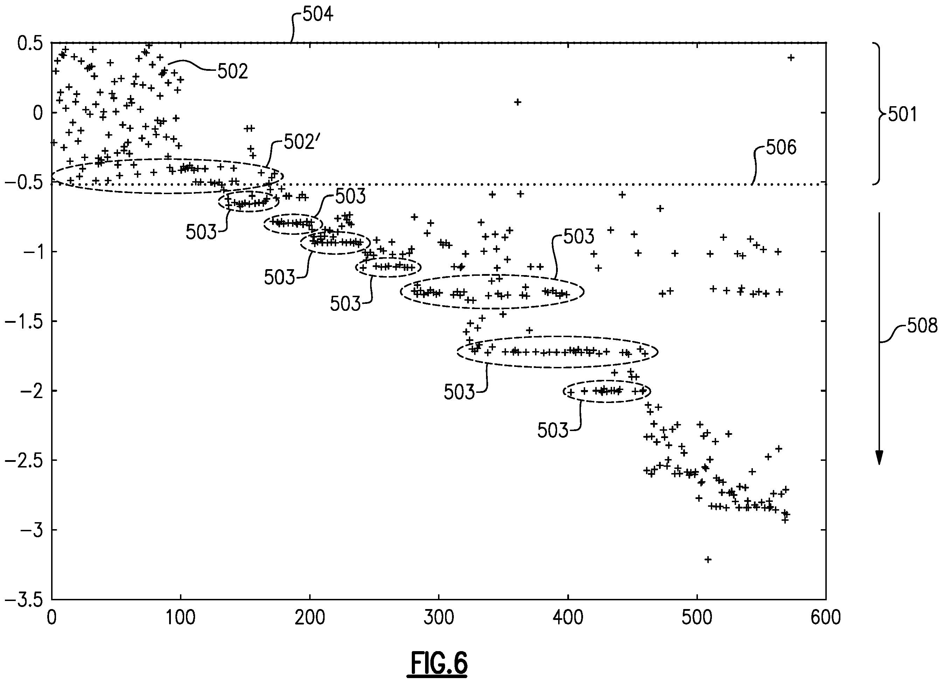

This process allows for automatic growth of the design space toward promising regions of the design space and can provide an objective increase in the determined optimum parameters of a design. With continued reference to Figures 1A-5, Figure 6 illustrates an example plot of sample points 502 for a given design space. The initial design space 501 is defined by upper and lower bounds 504, 506. A large concentration of sample points 502' crowd the lower bound 506. As a result, the lower bound 506 is shifted downwards each iteration along the axis 508. Each iteration results in additional concentrations 503 of points 502 until the last few iterations, where the number of points 502 crowding the bounds drops off. The expanded design space form each iteration is considered alongside the original design space resulting in the convergence on a single actual optimum position.

In one example, the optimization module including self-adaptive bounds is applied to a transonic airfoil design, and results in a 130% increase in the objective value of the optimization (approximately 1% increase in efficiency), while being subject to the same optimization costs as compared to usage of the airfoil design within an optimization process that does not include the self-adaptive bounds.

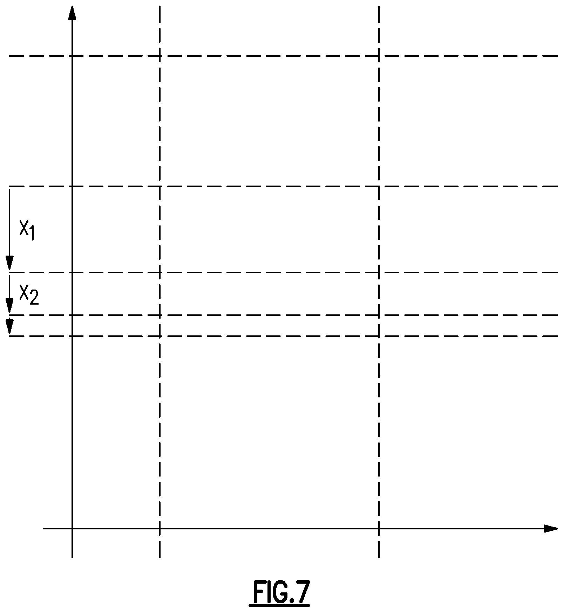

With continued reference to Figures 1-6, Figures 7 and 8 illustrate variations on how the self-adaptive bounds increase across iterations of the optimization process. In Figure 7, the lower bound increases by a decreasing amount each iteration. This pattern of increasing is utilized when an initial design space is close to accurate, and minimal bound adaptions are required.

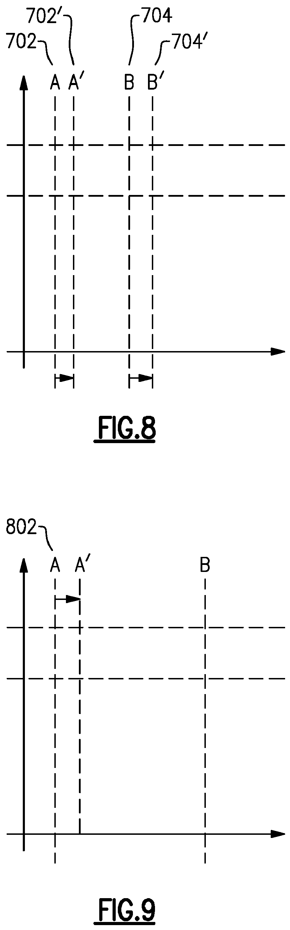

In Figure 8, the lower bound 702, 702' and the upper bound 704, 704' each change by the same amount, while maintaining the size of the design space throughout the iterations. This results in a shifting of the design space across iterations and decreases the amount of computations required in each iteration. The reduction in computations increases the speed of the process and decreases the processing power required to perform the optimization. Maintaining the size of the design space can result in certain previous sample points dropping out of the design space between iterations.

With continued reference to Figures 1-8, Figure 9 illustrates an inversion of the above described self-adapting bounds, where the self-adapting bound function detects a concentration of sample points near the lower bound 802 that is below a threshold concentration, and reacts by shifting the bound higher thereby decreasing the design space. This inverted adaption can be incorporated in the same system as self-adaptive bounds described in Figures 1-8. In some examples, the bound will shift inward (shrinking the design space) by a set percentage or a set distance. In alternative cases the bound can be shifted inward until it meets a sample point in order to prevent dropping of sample points in future iterations. In some implementations the bound shifting is limited such that it will only remove design space where no existing sample points are positioned. In other alternatives, such as those where the sample points near the bound do not include any optima, the bound shifting can remove one or more sample point from the analysis.

With continued reference to all of the above systems, it is appreciated that a single design suite can simultaneously incorporate and utilize all of the self-adjusting bound types described herein, or utilize the self-adjusting bound types in any combination, and the types are not mutually exclusive. Furthermore, the design process described above can be applied to any complex geometry analysis or gradient free analysis system and is not limited in scope to turbine engine blade design.

It is further understood that any of the above described concepts can be used alone or in combination with any or all of the other above described concepts. Although an embodiment of this invention has been disclosed, a worker of ordinary skill in this art would recognize that certain modifications would come within the scope of this invention. For that reason, the following claims should be studied to determine the true scope and content of this invention.

## Claims

1. An iterative optimization component of a computer aided design system comprising:
an optimization module (300; 900) including at least one of at least one solver (320; 920) configured to determine at least one value corresponding to a set of parameters defining a sample point (102; 102'; 202; 410; 502; 502') and an algorithmic analysis configured to determine the at least one value corresponding to the set of parameters defining the sample point (102... 502'), the optimization module (300; 900) further including and at least one of a surrogate assisted optimization process (942, 946) and an algorithmic optimization process (340), the at least one of the surrogate assisted optimization process (942, 946) and the algorithmic optimization process (340) being configured to determine at least one optimum point in a design space (501) using an initial set of sample points (410) and to output the at least one optimum point as at least one additional sample point (420; 503);
a self-adapting bound function (360; 960) configured to receive a combination of the initial set of sample points (410) and the at least one additional sample point (420; 503) and configured to adjust at least one bound (204; 206; 504; 506; 702, 704; 802) of the design space (501) when the combination of the initial set of sample points (410) and the at least one additional sample point (420; 503) has a number of sample points above a threshold number of sample points within a threshold distance of a bound (204... 802) of the design space (501), and output the new design space; and
wherein the iterative optimization component is configured to iterate until the number of sample points within the threshold distance of each bound (204...802) of the design space (501) is below the threshold number of sample points.

2. The iterative optimization component of claim 1, wherein the at least one of the surrogate assisted optimization process (942, 946) and the algorithmic optimization process (340) includes the surrogate assisted optimization process (942, 946), and the iterative optimization module (900) further comprises a database (930) configured to receive the at least one optimum value from the surrogate assisted optimization process (942, 946), the database (930) including all previously identified sample points.

3. The iterative optimization component of claim 1 or 2, wherein the optimization module (300; 900) includes a plurality of solvers (320; 920), each solver (320; 920) of the at least one solver (320; 920) being configured to determine at least one distinct value corresponding to each sample point (102... 502').

4. The iterative optimization component of any preceding claim, wherein the optimization module (300; 900) includes at least a computational fluid dynamics efficiency solver (320; 920).

5. The iterative optimization component of any preceding claim, wherein the optimization module (300; 900) includes the algorithmic analysis configured to determine the at least one value corresponding to the set of parameters defining the sample point (102...502').

6. The iterative optimization component of any preceding claim, wherein the design space (501) is a multi-dimensional design space (501) having greater than three dimensions.

7. The iterative optimization component of any preceding claim, wherein each dimension of the design space (501) corresponds to a parameter of a complex component design, wherein the complex component design is optionally an airfoil shaped component (20) for a gas turbine engine.

8. The iterative optimization component of any preceding claim, wherein: the threshold distance is a fixed magnitude determined as a percentage of the initial design space (501); or the threshold distance is a percentage of a current design space.

9. The iterative optimization component of any preceding claim, wherein the threshold number of sample points is at least 10% of the total number of sample points in the design space (501), wherein, optionally, the threshold number of sample points is 15% of the total number of sample points in the design space (501).

10. The iterative optimization component of any preceding claim, wherein adjusting at least one bound (204...802) of the design space (501) comprises simultaneously adjusting each bound (204... 802) of the design space (501) where the combination of the initial set of sample points (410) and the at least one additional sample point (420; 503) has a number of sample points above the threshold number of sample points within the threshold distance of the bound (204...802) of the design space (501).

11. A process for designing a complex structure (20) comprising:
defining a plurality of parameters (Rs, Lc), the plurality of parameters (Rs, Lc) combining to define a shape and structure of the complex structure (20);
defining a multi-dimensional parameter space (501) having a dimension corresponding to each parameter (Rs, Lc) in the plurality of parameters (Rs, Lc);
defining an upper bound (204; 206; 504; 704) on each dimension of the multi-dimensional parameter space (501) and a lower bound (204; 206; 506; 702; 802) on each dimension of the multi-dimensional parameter space (501);
distributing a plurality of initial sample points (410) within the bounds (204; 206; 504; 506; 702; 704; 802) in the multi-dimensional parameter space (501);
performing an optimization process configured to optimize for at least one feature, the optimization process identifying at least one new sample point (420; 503) within the bounds (204; 206; 504; 506; 702; 704; 802);
identifying a presence of at least a threshold percentage of sample points within a threshold distance of a first bound (204; 206; 504; 506; 702; 704; 802) and shifting the first bound (204; 206; 504; 506; 702; 704 ; 802), thereby expanding the size of the multi-dimensional parameter space (501); and
reiterating the optimization process and identifying the presence of at least the threshold percentage of the sample points within the threshold distance of the first bound (204; 206; 504; 506; 702; 704; 802) until less than the threshold percentage of the sample points are within the threshold distance of the each bound (204; 206; 504; 506; 702; 704; 802).

12. The process of claim 11, wherein the multi-dimensional parameter space (501) is greater than three dimensions.

13. The process of claim 11 or 12, wherein the optimization process is configured to optimize for a plurality of feature including computational fluid dynamics efficiency and stress resilience.

14. The process of any of claims 11 to 13, wherein the complex structure (20) is a gas turbine engine component (20) including an airfoil shaped profile.

15. The process of any of claims 11 to 14, wherein shifting the first bound (204; 206; 504; 506; 702; 704; 802) comprises moving the first bound (204; 206; 504; 506; 702; 704; 802) a distance (X₁) equal to a percentage of the current design space (501); and/or wherein the process further comprises simultaneously shifting each bound (204; 206; 504; 506; 702; 704; 802) having at least threshold percentage of sample points within a threshold distance of the bound.
